**Europäisches Patentamt**

**European Patent Office**

**Office européen des brevets**

(19)

(11) Veröffentlichungsnummer: **0 083 451**
**B1**

# (12) EUROPÄISCHE PATENTSCHRIFT

(45) Veröffentlichungstag der Patentschrift:
26.02.86

(21) Anmeldenummer: **82112085.4**

(22) Anmeldetag: **29.12.82**

(51) Int. Cl.⁴: **B 60 B 37/10**

(54) **Lösbare Radbefestigung.**

(30) Priorität: **02.01.82 DE 3200011**

(43) Veröffentlichungstag der Anmeldung:
**13.07.83 Patentblatt 83/28**

(45) Bekanntmachung des Hinweises auf die Patenterteilung:
**26.02.86 Patentblatt 86/9**

(84) Benannte Vertragsstaaten:
**FR GB IT NL**

(56) Entgegenhaltungen:
**DE - A - 2 911 406**
**DE - B - 1 045 244**
**FR - A - 1 472 486**
**FR - A - 2 005 854**
**FR - A - 2 113 819**
**US - A - 2 253 708**

(73) Patentinhaber: **LEIFHEIT Aktiengesellschaft,
Leifheitstrasse, D-5408 Nassau/Lahn (DE)**

(72) Erfinder: **Ohm, Heinz, Grosser Ring 5,
D-6250 Limburg 9 (DE)**
Erfinder: **Pätzold, Dieter, Scheubachweg 7,
D-5408 Nassau/Lahn (DE)**

## Beschreibung

Die Erfindung bezieht sich auf eine lösbare Befestigungseinrichtung für ein Rad an einem Einkaufswagen gemäß dem Oberbegriff des Anspruches 1.

Zum Transport der Einkaufswagen, Transportkarren und Kinderwagen sowie ähnlicher Fahrzeuge im Kraftfahrzeug sollen diese möglichst klein zusammenzulegen sein. Aber auch beim Transport aus der Fertigungsstätte zum Abnehmer ist es aus Kostengründen wünschenswert, die Verpackungseinheiten so klein als möglich zu halten. Gerade bei obigen Fahrzeugen stehen beim Zusammenlegen die Räder oft weit über die Aussenkontur über, so daß diese schon seit langer Zeit mit lösbaren Befestigungseinrichtungen für die Räder versehen werden.

Standardmäßig ist bei auf dem Markt befindlichen Kinder- und Einkaufswagen eine Befestigungseinrichtung für Räder bekannt, bei der an eine Achskappe, die als Träger für eine Radspange dient, eine die Achse aufnehmende Radnabe angeformt ist. Dabei wird die Radspange, die im Prinzip U-förmig mit einer in eine Eindrehung der Achse einschnappenden Einbuchtung ausgebildet ist, in seitlich offenen Einschnitten geführt. Die Radspange steht mit ihrem Bogenteil deutlich über die Achskappenkontur über; dieser Bogen dient als Betätigungsglied zum Entriegeln der Radspange.

Diese beschriebene Ausführung hat den Nachteil, daß die Schenkel der Radspange nach aussen unbegrenzt ausweichen können. Sie bilden einen über den Durchmesser der Achskappe hinausgehende Hebelarm. Dadurch kann bereits eine starke Erschütterung oder ein Streifen am Randstein eines Gehweges eine Entriegelung des Rades und damit den Verlust des Rades zur Folge haben.

Aufgabe der Erfindung ist es, eine lösbare Befestigungseinrichtung für ein Rad an einem Fahrzeug der vorab beschriebenen Gattung zu schaffen, bei der das Rad nach wie vor leicht lösbar ist, aber dennoch gegen ein unbeabsichtigtes Entriegeln durch Anstoßen an Bordsteinen oder starke Erschütterungen absolut gesichert ist. Zudem muß eine einfache, korrekte und verwechslungssichere Montage in der Großserie sowie beim täglichen Gebrauch gewährleistet sein.

Diese Aufgabe wird mit den kennzeichnenden Merkmalen des Anspruches 1 gelöst. Durch die tunnelförmige Ausbildung des Einschnittes wird der wirksame Hebelarm der Federschenkel verkürzt, so daß eine größere Haltekraft auf die Eindrehung der Achse ausgeübt wird. Zudem wird die Auslenkbewegung nach aussen durch die Seitenwand des Einschnittes begrenzt. Da zwischen den beiden Schenkeln der Feder durch den Einschnitt ein Leerraum entsteht, kann der Federbogen sehr nieder ausgeführt werden, so daß praktisch kein Überstand über die Achskappe mehr erforderlich ist. Die Radspange kann von unten mit einer Münze dennoch einfach zur Entriegelung aus dem Einschnitt herausgedrückt werden.

Weitere Ausgestaltungen der Erfindung sind den Unteransprüchen zu entnehmen. Durch die kegelstumpfartige Ausbildung des Achsendes und auf der Innenseite der Eindrehung wird eine leichte Endmontage des Rades in der Fertigung erreicht. Es kann dabei das Rad komplett mit Achskappe mit angeformten hülsenförmigem Gleitlager und der Radspange vormontiert werden. Zur Endmontage wird lediglich diese vormontierte Einheit auf das Achsende aufgedrückt. Die sichere Montage ist dabei akustisch gut wahrnehmbar.

Durch die symetrische Ausbildung des Einschubanschlages sowie des Rastabsatzes beidseitig am Einschnitt wird die Montagesicherheit weiter verbessert. Der ästhetischen Verbesserung dient die Verlegung des Einschubanschlages ins Innere des Einschnittes, so daß die Radspange nach erfolgter Montage komplett in der Kontur der Achskappe verschwindet.

Zwei Auführungsbeispiele der Erfindung werden im folgenden an Hand der Zeichnungen näher erläutert.

Es zeigen:

Figur 1 einen Schnitt durch eine Befestigungseinrichtung mit Rad und Achsende,

Figur 2 einen Schnitt gemäß der Linie II-II Figur 1 und

Figur 3 eine Alternativlösung in einer Ansicht gemäß der Figur 2.

Auf einer Achse 1 ist mittels einer Befestigungseinrichtung 2 ein Rad 3 angeordnet. Die Achse 1 ist im Endbereich 4 mit einer Eindrehung 5, die auf der Innenseite 6 kegelstumpfartig und auf der gegenüberliegenden Seite rechtwinklig ausgeführt ist,versehen; das Achsende 7 endet kegelstumpfartig.

Die Achse 1 ist drehbar in einem hülsenförmigen Ansatz 8, der an eine Achskappe 9 angeformt ist, gelagert und über eine Radspange 10 gesichert. Die Radspange 10, sie ist als 2-schenklige U-förmige Feder ausgebildet, wird in einem tunnelförmigen Einschnitt 11 geführt; sie stützt sich dabei unter Spannung an den Seitenwänden 12 des Einschnittes 11 und auf dem Nutgrund 13 der Eindrehung 5 ab. Die beiden Schenkel 14 bzw. 14' sind entsprechend dem Abstand 15 zwischen Nutgrund 13 und Seitenwand 12 profiliert. Der Einschnitt 11 ist mit einem Einschubanschlag 16 und einem Rastabsatz 17 versehen. Die beiden Schenkel 14 der Radspange 10 sind sowohl am Bogen 18 als auch an den Endspitzen 19 entsprechend dem Rastabsatz und dem Einschubanschlag profiliert.

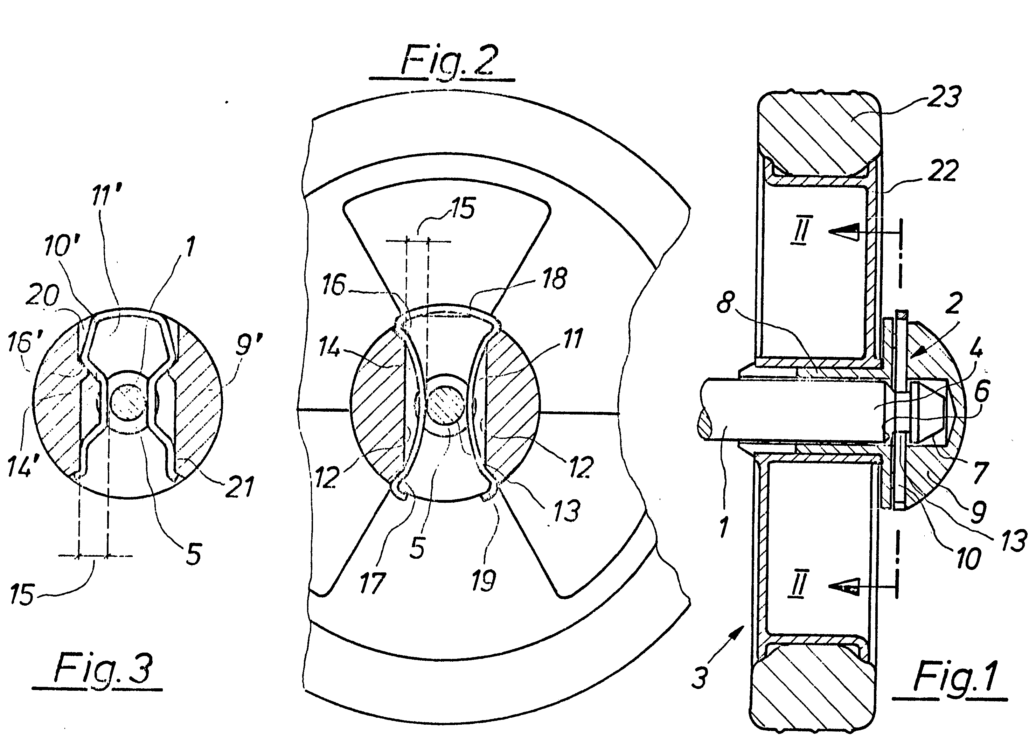

In Figur 3 ist eine Variante gemäß den Figuren 1 und 2 dargestellt. Dabei sind identische Teile mit den gleichen Bezugszeichen versehen. Die in der Ausführung abweichenden Teile aber von der Funktion her identischen Teile sind mit einem Strich versehen.

So ist bei dieser Ausführung der Einschubanschlag 16' weiter in das innere 20 des Einschnittes 11' verlegt. Die Radspange 10' ist etwas eckiger ausgeführt und hat einen langen Schenkelbereich 21, der den wirksamen Hebelarm der Radspange verringert und die Haltekraft dadurch erhöht.

Auf den Ansatz 8 ist vor Einführen der Achse 1 die Felge 22 mit Reifen 23 aufgeklipst.

## Patentansprüche

1. Lösbare Befestigungseinrichtung für ein Rad an einem Einkaufswagen, Transportkarren, Kinderwagen oder ähnlichem mit einer am Rad gehaltenen Achskappe zur Aufnahme der Achse, die im Endbereich mit einer Eindrehung zur kraft- und formschlüssigen Aufnahme einer in einem seitlich offenen Einschnitt der Achskappe gehaltenen Radspange versehen ist, dadurch gekennzeichnet, daß der Einschnitt (11, 11') tunnelförmig mit einem Einschubanschlag (16, 16') und einem Rastabsatz (17) für die Radspange (10, 10') ausgebildet ist, wobei die Radspange, sich unter Spannung zwischen der Seitenwand (12) des Einschnittes und dem Nutgrund (13) der Eindrehung (5) abstützend, angeordnet ist.

2. Lösbare Befestigungseinrichtung nach Anspruch 1, dadurch gekennzeichnet, daß die Eindrehung (5) auf der Innenseite (6) kegelstumpfartig ausgebildet ist.

3. Lösbare Befestigungseinrichtung nach Anspruch 1 und 2, dadurch gekennzeichnet, daß das Achsende (7) kegelstumpfartig ausgebildet ist.

4. Lösbare Befestigungseinrichtung nach einem der Ansprüche 1 bis 3, dadurch gekennzeichnet, daß der Einschubanschlag (16) und der Rastabsatz (17) symmetrisch jeweils beidseitig am Einschnitt (11) vorgesehen sind.

5. Lösbare Befestigungseinrichtung nach einem der Ansprüche 1 bis 3, dadurch gekennzeichnet, daß der Einschubanschlag (16') im Innern (20) des Einschnittes (11') vorgesehen ist, und die Radspange (10') innerhalb der Kontur der Achskappe (9') liegt.

6. Lösbare Befestigungseinrichtung nach einem der Ansprüche 1 bis 5, dadurch gekennzeichnet, daß die Achskappe (9, 9') mit einem hülsenförmigen Ansatz (8), der als Gleitlager dient, versehen ist.

## Revendications

1. Dispositif de fixation démontable d'une roue à une poussette de marché, un chariot de transport, une voiturette d'enfant ou véhicule analogue, comportant un chapeau d'axe câlé sur la roue et destiné à recevoir l'axe qui présente, dans sa zone extrême, une gorge tournée dans la masse pour recevoir, mécaniquement et par concordance de formes, une agrafe de roue retenue dans une encoche du chapeau d'axe ouverte latéralement, caractérisé par le fait que l'encoche (11, 11') est réalisée en forme de tunnel avec une butée d'enfoncement (16, 16') et un décrochement d'encliquetage (17) associés à l'agrafe (10, 10') de la roue, cette agrafe de roue étant intercalée, en prenant appui avec tension, entre la paroi latérale (12) de l'encoche et le fond (13) de la gorge (5) façonnée au tour.

2. Dispositif de fixation démontable selon la revendication 1, caractérisé par le fait que la gorge (5) façonnée au tour est configuréeen tronc de cône sur sa face interne (6).

3. Dispositif de fixation démontable selon les revendications 1 et 2, caractérisé par le fait que l'extrémité (7) de l'axe est de réalisation tronconique.

4. Dispositif de fixation démontable selon l'une des revendications 1 à 3, caractérisé par le fait que la butée d'enfoncement (16) et le décrochement d'encliquetage (17) sont, à chaque fois, prévus symétriquement de part et d'autre de l'encoche (11).

5. Dispositif de fixation démontable selon l'une des revendications 1 à 3, caractérisé par le fait que la butée d'enfoncement (16') est prévue dans l'espace interne (20) de l'encoche (11'), l'agrafe (10') de la roue étant située à l'intérieur du contour du chapeau (9') de l'axe.

6. Dispositif de fixation démontable selon l'une des revendications 1 à 5, caractérisé par le fait que le chapeau (9, 9') de l'axe est doté d'un appendice (8) en forme de douille servant de palier de coulissement.

## Claims

1. Releasable fastening device for a wheel on a shopping trolley, handcart, perambulator or the like, with an axle cap retained on the wheel and intended for receiving the axle which is provided in the end region with a lathe-turned groove for receiving non-positively and positively a wheel clip retained in a laterally open recess in the axle cap, characterised in that the recess (11, 11') is made tunnel-shaped with a push-in stop (16, 16') and with an engagement shoulder (17) for the wheel clip (10, 10'), and the wheel clip is arranged so as to be supported under tension between the side wall (12) of the recess and the groove bottom (13) of the lathe-turned groove (5).

2. Releasable fastening device according to Claim 1, characterised in that the lathe-turned groove (5) is made frustoconical on the inside (6).

3. Releasable fastening device according to Claims 1 and 2, characterised in that the axle end (7) is made frustoconical.

4. Releasable fastening device according to one of Claims 1 to 3, characterised in that the push-in stop (16) and the engagement shoulder (17) are each arranged symmetrically on both sides of the recess (11).

5. Releasable fastening device according to one of Claims 1 to 3, characterised in that the push-in stop (16') is located on the inside (20) of the recess (11'), and the wheel clip (10') is arranged within the contour of the axle cap (9').

6. Releasable fastening device according to one of claims 1 to 5, characterised in that the axle cap (9, 9') is provided with a sleeve-shaped extension (8) serving as a plain bearing.

_Fig.2_

_Fig.3_

_Fig.1_

0 083 451